# EUROPEAN PATENT SPECIFICATION

(11) **EP 2 700 312 B1**
(45) Date of publication and mention of the grant of the patent: **01.08.2018**
(21) Application number: 13460048.5
(22) Date of filing: 23.07.2013
(51) Int. Cl.: A01N 33/12, A01N 43/653, B27K 3/36, B27K 3/50, C08L 97/02

(54) **Method of particleboard protection against fungi and substance for particleboard protection against fungi**
Verfahren zu Spanplattenschutz gegen Pilze und Substanz zu Spanplattenschutz gegen Pilze
Procédé de protection de panneaux d'aggloméré contre les champignons et substance de protection de panneaux d'aggloméré contre les champignons

(30) Priority: 24.07.2012 PL 40012212
(43) Date of publication of application: 26.02.2014
(73) Proprietor: Instytut Technologii Drewna, 60-654 Poznan (PL)
(72) Inventor: Zabielska-Matejuk, Jadwiga, 62-002 Suchy Las (PL); Pernak, Juliusz, 60-573 Poznan (PL); Frackowiak, Iwona, 60-162 Poznan (PL); Kot, Mariusz, 61-647 Poznan (PL); Andrzejak, Cezary, 61-608 Poznan (PL)
(74) Representative: Piatkowska, Elzbieta

(56) References cited:
- EP-A1- 0 533 017
- EP-A2- 0 781 637
- WO-A2-2006/118980
- FR-A1- 2 961 426
- PL-A1- 379 415
- PL-A1- 393 431
- Iwona Frackowiak ET AL: "APPLICATION OF AMMONIUM IONIC LIQUIDS IN PARTICLEBOARD TECHNOLOGY", Drewno. Pr. Nauk. Donies. Komunik, 1 January 2010 (2010-01-01), XP55094715, Retrieved from the Internet: URL:http://yadda.icm.edu.pl/yadda/element/ bwmeta1.element.dl-catalog-65b07956-fc9a-4 af7-bab4-f12ca4c71780/c/download.pdf [retrieved on 2014-01-03]
- Andrzej Fojutowski ET AL: "THE ASSESSMENT OF MECHANICAL PROPERTIES OF WOOD TREATED WITH IONIC LIQUIDS", Drewno. Pr. Nauk. Donies. Komunik., 1 January 2010 (2010-01-01), XP55094714, Retrieved from the Internet: URL:http://yadda.icm.edu.pl/yadda/element/ bwmeta1.element.baztech-article-BAT8-0017- 0027/c/httpwww_bg_utp_edu_plartd20nr20184d rewnovol53nr184a_fojutowskia_noskowiakm_ko ta_kropacza_stangierska.pdf [retrieved on 2014-01-03]

## Description

The present invention relates to a method of antifungal protection of particleboards and the substance for such an antifungal protection of particleboards based on an application of ionic liquids.

Particleboards are defined as boards manufactured with the use of specially machined woodchips, waste woodchips from mechanical wood processing, as well as fragmented lignocellulosic materials of agricultural origin, e.g. rape straw, cereal straw, hemp or linen hurl.

Methods of antifungal protection of ready-made particleboards consisting of coating the surface of the particleboard with suitable fungicidal and biocide substances by means of smearing, spraying, or bathing are known. These methods suffer from limited efficacy due to the difficult application of the biocide. Impregnation of particleboards by means of bathing or vacuum impregnation has a negative impact on their physical and mechanical properties. The quality of the protection is also insufficient because of a non-uniform distribution of the active substance.

A second group of antifungal protection of particleboards includes methods involving protection of woodchips by means of treatment with suitably chosen solutions of fungicidal substances, prior to the formation of mattress. These methods allow for a uniform distribution of the active substance, however, they result in a significant increase of the woodchip moisture content. Thus, supplementary drying of the woodchips is needed. From the technological point of view, it results in higher manufacturing costs and, in the case when oily substances are applied, due to solvent evaporation, it enhances fire hazard deteriorating the health and safety conditions.

A third group includes methods in which proper amounts of the protecting agent are added to the binder medium. These methods, from the point of view of the intended goal, should be most advantageous, since no additional operations in the particleboard formation process are required and a uniform biocide distribution in the particleboard is possible. Nevertheless, such methods are difficult to implement in practice.

The Polish patent PL 54652 reveals a method for a simultaneous antifungal and anti-insect protection, in which urea-formaldehyde resins are cured using an aqueous composition of ammonium or sodium fluoride, orthoboric acid, and potassium dichromate.

The patent PL 63380 reveals a method for simultaneous curing of urea-formaldehyde, phenol-formaldehyde or/and melamine resins and antifungal and anti-insect protection of lignocellulosic materials, in particular particleboards, using a composition consisting of ammonium fluoroborate, sodium fluoroborate, pentachlorophenol, and hexachlorocyclohexane. This composition is applied in the form of an aqueous suspension which is added, in the case of particleboard manufacturing, into the adhesive resin directly on the woodchips, before bonding. In the both technologies are used chemicals which are dangerous for health and unfriendly to the environment, e.g. fluorides and chromium compounds. Thus, the applicability of these methods is distinctly limited.

From the description of the invention PL 144602 a method for manufacturing of bioresistant lignocellulosic composites is known, in which lignocellulosic particles are bonded with an adhesive formulation in the form of an amine resin doped with chloracetamide as a bioprotective substance and urea or melamine or dicyandiimide as a formaldehyde emission reducing substance. The chemicals applied in this method are toxic and dangerous for the environment. Therefore, its applicability is also limited.

Tascioglu has described a method for protection of particleboards using quaternary ammonium salts of the type of ACQ (*Alkaline Copper QUAT*) [Tascioglu C., Tsunoda K. International Biodeterioration & Biodegradation. 2010, vol. 64, p. 683-687], which were applied for pressure impregnation of various wood-based materials. However, the results of this protective method are not satisfactory, in particular when it is applied for OSB boards (*oriented strand board*) and particleboards, because pressure impregnation does not provide uniform penetration of the particleboard by the protective substance.

The current invention aims at providing a method for antifungal protection of particleboards and OSB boards against wood degrading fungi causing the so-called soft rot "in bulk", that is in the entire volume of the particleboard and materials allowing for implementation of such a protection.

Unexpectedly it was found that it is possible to introduce into the adhesive mass applied for particleboards and OSB boards manufacturing ammonium-based ionic liquids containing the nitrate(V), of the general formula 1, 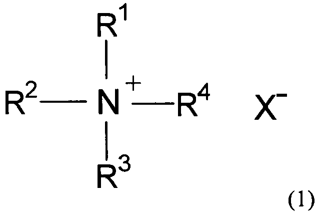 wherein
- X is nitrate(V) anion
   - R¹ is an alkyl substituent of a carbon chain length of C₁.₂₀ or an unsaturated hydrocarbon substituent of a carbon chain length of C₃-₂₀, containing one or several unsaturated bonds,
   - R², R³ are equal and stand for an unsaturated hydrocarbon substituent of a carbon chain length of C₃₋₁₆containing one or several unsaturated bonds,
- R⁴ stands for an alkyl substituent with the carbon chain length of C₁₋₂₀, or an unsaturated hydrocarbon substituent with the carbon chain length C₃₋₂₀ and characterized by one or more than one multiple chemical bonds,
and an addition of tebuconazole in a solutionof an adhesive resin
while the so protected particleboards do not display any detectable alterations of their physical and mechanical properties, which are consistent with the requirements of the standards defined for chipboards dedicated for use under humid conditions.

Within the meaning of the present patent application, the term dispersion is used in terms of both a suspension of an ionic liquid as well as emulsion of it. Depending on temperature and the type of the ionic liquid, in different embodiments of this invention, it forms a suspension of solid particles or an emulsion of liquid particles.

A first aspect of the present invention relates to the method of antifungal protection of particleboards that involves a use of a dispersion in water or in an adhesive resin solution of comminuted ionic liquid particles according to the formula 1 wherein X is nitrate nitrate(V), in which the substituents are defined above, with addition of 1,2,4-triazole derivatives, namely (*RS*)-1-(4-chlorophenyl)-4,4-dimethyl-3-(1,2,4-triazol-1-yl-methyl) pentan-3-ol (Tebuconazole) where the the ratio of the ionic liquid to the tebuconazole is between 100:5 and 7:3, preferably between 9:1 and 4:1. The mixture of the adhesive resin and the dispersion of the ionic liquid and tebuconazole is applied onto woodchips according to known procedures and, thus, also according to known procedures, preparation of the particleboard is continued. The ionic liquid dispersion is applied at temperatures not exceeding 60 °C, preferably not higher than 40 °C. Tebuconazole is applied in an amount of not less than 2 kg/m³ of the particleboard.

In the embodiment of the invention according to the first aspect, the comminuted ionic liquid with an addition of tebuconazole in form of suspension or emulsion in water, optionally with an addition of a solvent, preferably ethyl alcohol, isopropyl alcohol, or butanol, is spread onto chips together with the resin used for bonding and the process of particleboard production is continued with known methods. Depending on the technical capabilities, the resin solution and the ionic liquid suspension or emulsion is applied simultaneously or one after another, but in consecutive steps, whereat it is preferable that the ionic liquid is applied before the resin and hardener.

In embodiments of the invention the following bonding resins, at typical concentrations of 65 to 70%, are used:
- urea-formaldehyde resins,
- melamine-urea-formaldehyde resins,
- phenol-modified melamine-urea-formaldehyde resins.

In embodiments of the invention the ionic liquid of the general formula 1, wherein the groups R¹, R², R³, R⁴ are defined above, can be used as a pure substance or in form of a composition. The term: pure ionic liquid refers to a ionic liquid wherein only one type of the R¹, R², R³, and R⁴ substituents is present.

In all embodiments of the invention, in order to prepare an ionic liquid suspension in solution a preliminarily comminuted ionic liquid is introduced into a solution of the resin or into water and such a mixture is vigorously stirred until a uniform suspension is obtained. In the case of preparation of the ionic liquid emulsion in a resin solution two methods can be used. According to the first method, the ionic liquid in the liquid phase is introduced into the resin solution or water, which is then vigorously stirred until emulsion is obtained. The second method involves a preparation of the ionic liquid solution in a solvent, preferably in ethyl alcohol, isopropyl alcohol, or butanol, and subsequent introduction of this so prepared solution into a solution of the resin or into water with subsequent vigorous stirring until uniform emulsion is formed.

An addition of an ionic liquid into an adhesive resin usually results in an increased viscosity, thus, preparation of the ionic liquid dispersion in the resin at an elevated temperature may be advantageous. Thus, for this purpose, the resin is heated up to a temperature between 20 and about 60°C, preferably 40°C. Alternatively, the concentration of the resin is reduced from 65% to about 60%. The so prepared dispersion is spread onto woodchips at a temperature not exceeding 60 °C, preferably at 30°C.

In this method comminuted ionic liquids are used whose particle size is not larger than 3 mm.

A second aspect of the invention relates to a chemical preparation useful for antifungal protection of particleboards containing ammonium-based ionic liquids with the nitrate(V), of the general formula 1, in which the rests R¹, R², R³, R⁴ and X are defined above, and tebuconazole and the ratio of the ionic liquid to the tebuconazole is between 100:5 and 7:3, preferably between 9:1 and 4:1.

An unexpected effect observed during the study which led to this invention has disproved a previous opinion that ionic liquids cannot be dissolved in water and cannot be dispergated in water and even less in amine resins characterized by limited water tolerances. Such an opinion hindered any attempts of applying these compounds for particleboard protection without use of organic solvents. Application of organic solvents in the particleboard technology is unrealistic for practical reasons due to high costs, considerable fire hazard, possible threat to the environment, as well as due to the specific manufacturing processes. For these reasons, antifungal protection of particleboards has been usually restricted to spreading of the biocidic compositions onto final particleboards and, in most cases, not on the manufacturing site but directly at the consumer, for instance on a construction area.

The invention is explained in more detail using the following examples of the implementation of the proposed method and the properties of the particleboards manufactured according to the method being the subject of this invention.

The abbreviations used in the examples mean:
- [DDA][NO₂] - didecyldimethylammonium nitrate(III),
- [DDMA][NO₃] - dodecyldimethylammonium nitrate(V),
- [DDA][NO₃][15%T] - mixture of didecyldimethylammonium nitrate(V) and 15% tebuconazole,

The physical and mechanical properties were investigated according to the standards specified in PN-EN 312: 2011. Plyty wiórowe. Wymagania Techniczne. (eng.Particleboards - Specifications).

The resistance of wood protected with the antifungal preparations according to the invention against hyphal fungi (molds) was examined according to the instruction Instrukcja ITB Nr 355/98 (1998): Ochrona drewna budowlanego przed korozj 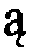 biologiczn 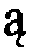 środkami chemicznymi. Wymagania i badania. Instytut Techniki Budowlanej, Maszynopis, Warszawa: 1-27. (Eng. ITB Instruction No. 355/98 (1998): Protection of structural timber against biological corrosion using chemical agents. Requirements and tests. Building Research Institute), typescript, Warsaw: 1-27

The fungistatic and fungicidal activities of the investigated compositions were determined by the substrate method developed by Wazny and Thornton (Wazny J., Thornton I.D. (1986): Comparative testing of strains of the dry rot fungus Serpula lacrymans (Schum. ex Fr.) S.F. Gray II. The action of some wood preservatives in agar media. Holzforschung. 40: 383-388.)

### Example 1 (Reference example).

The particleboard was prepared from the following materials and under following conditions:
- raw lignocellulosic material: chips from pine wood prepared under laboratory conditions using a Pallmann wood cutting machine, knife hanging - 0.9 mm, useful fraction - 8/2 mm,
- melamine-urea-phenol-formaldehyde MUPF 1000-1800 mPa*s - Melfemo S - supplied by SILEKOL Sp. z.o.o in K 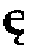 dzierzyn -Koźle
- hardener - NH₄NO₃
- woodchip moisture content 2.5±1%,
- particleboard structure; monolayer, nominal thickness 16 mm,
- nominal density 670 kg/m³,
- degree of bonding 10%,
- pressing temperature 200°C.
- pressing coefficient 15 s/mm.

The resin was heated up to a temperature of about 40 °C. Then, ionic liquid [DDA][NO₂] (powdered with a laboratory mortar prior to use) was added in an amount corresponding to 4.5 kg per 1 m³ of the final particleboard. The mixture was stirred with a mechanical stirrer until homogenous mixture was obtained, i.e. for about 20 minutes. Subsequently, the hardener was added and the so prepared adhesive was introduced into a bonding press, in which it was applied through air nozzles onto the woodchips. The subsequently formed mattress was preliminarily cold pressed using a pressure of 40 kG/cm² and it was processed by hot pressing at a temperature of 200 °C and under a pressure of 30 kG/cm² using a press time coefficient of 15 s/mm board thickness.

### Examples 2 and 3 (Reference examples)

Particleboards were prepared according to the procedures from Example 1 using different processing parameters. The composition and processing parameters are listed in Table 1 and the particleboard properties are given in Table 2. Example 3 represents the so -called blank sample without the use of ionic liquid.

**Table 1**

| Example | Recipe | | | |
|---|---|---|---|---|
| | Ionic liquid | | Hardener | Gelation time |
| | Type | Amount [kg/m³] | Amount [%] | [s] |
| 1 | [DDA] [NO₂] | 4.5 | 2.5 | 144 |
| 2 | [DDA] [NO₂] | 9.0 | 2.5 | 190 |
| 3 | - | - | 2.5 | 143 |

**Table 2**

| Example | Bending strength -Rg | Modulus of elasticity -E | Tensile strength -Rr | Particleboard mass loss upon exposition to fungus *C.puteana* | Decay Susceptibility Index DSI |
|---|---|---|---|---|---|
| | [N/mm²] | [N/mm²] | [N/mm²] | [%] | |
| 1 | 15.5 | 3364 | 0.42 | 31.7 | 122.68 |
| 2 | 13.1 | 3091 | 0.31 | 22.8 | 88.22 |
| 3 | 21.5 | 3763 | 0.64 | 38.2 | 147.81 |

### Example 4. (Reference example)

Particleboards were prepared according to procedures described in Example 1. Instead of the MUPF resin a melamine-urea-formaldehyde resin MUF characterized by a viscosity of 250 - 800 mPa*s (Melkol 410) from SILEKOL Sp. z.o.o in K 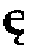 dzierzyn -Kozle was used.

In order to reduce the resin viscosity and to value which guarantees a uniform coating of the woodchips with the resin the resin content was reduced from 65 to 60%. Then, at a temperature of about 20 °C an ionic liquid [DDA][NO₂] in an amount of 9 kg/m³ of the final particleboard and NH₄NO₃ as hardener were added to the resin. Thus, all components were stirred with a mechanical stirrer until a homogenous mixture was obtained, i.e. for about 5-10 minutes. Further procedures were performed like in Example 1.

### Examples 5-8 (Reference example)

Particleboards were prepared according to the procedures from Example 4 using ionic liquid [DDMA][NO₃]. The processing parameters are listed in Table 3 and the particleboard properties are given in Table 4.

### Examples 9-15

Particleboards were prepared according to the procedures from Example 4 using different ionic liquid with tebuconazole and processing parameters. The composition and processing parameters are listed in Table 3 and the particleboard properties are given in Table 4. Control represents the so- called blank sample without the use of ionic liquid. In Example 15 an aqueous urea-ammonium nitrate (RSM) solution was used.
Examples 5 7 and 6 8 were performed without use of the hardener in order to examine the catalytic effect of the ionic liquid on the process of the resin polycondensation during the pressing processes. The results obtained confirm that a ionic liquid can be applied as a resin hardening catalyst.

**Table 3**

| Example | Recipe | | | |
|---|---|---|---|---|
| | Ionic liquid | | Hardener | Gelation time |
| | Type | Amount [kg/m³] | Amount [%] | [s] |
| Control | - | - | 3 | 73 |
| 5 | [DDMA][NO₃] | 9.0 | 0 | 182 |
| 6 | [DDMA][NO₃] | 6.25 | 0 | 183 |
| 7 | [DDMA][NO₃] | 6.25 | 3.0 | 93 |
| 8 | [DDMA][NO₃] | 9.0 | 3.0 | 99 |
| 9 | [DDA][NO₃](15%T) | 1.5 | 3.0 | 86 |
| 10 | [DDA][NO₃](15%T) | 4.3 | 3.0 | 99 |
| 11 | [DDA][NO₃](15%T) | 3.0 | 3.0 | 94 |
| 12 | [DDA][NO₃](15%T) | 4.5 | 3.0 | 108 |
| 13 | [DDA][NO₃](15%T) | 4.5 | 3.0 | - |
| 14 | [DDA][NO₃](15%T) | 4.5 | 3.0 | - |
| 15 | [DDA][NO₃](15%T) | 3.0 | 3.0 | 76 |

**Table 4**

| Example | Bending strength -Rg | Modulus of elasticity -E | Tensile strength -Rr | Particleboard mass loss upon exposition to fungus *C.puteana* | Decay Susceptibility Index DSI |
|---|---|---|---|---|---|
| | [N/mm²] | [N/mm²] | [N/mm²] | | |
| 4 | 23.9 | 3781 | 0.93 | 40.7 | 131.73 |
| 5 | 14,2 | 3121 | 0,42 | 15,3 | 59,32 |
| 6 | 18,4 | 3955 | 0,55 | | |
| 7 | 15,0 | 3387 | 0,41 | | |
| 8 | 15,2 | 3490 | 0,45 | | |
| 9 | 19.1 | 3640 | 0.76 | 9.2 | 37.89 |
| 10 | 16.4 | 3294 | 0.55 | 1.4 | 5.72 |
| 11 | 17.1 | 3373 | 0.70/0.07* | 2.1 | 8.81 |
| 12 | 15.8 | 3464 | 0.57 | - | - |
| 13 | 15.7 | 3526 | 0.57 | - | - |
| 14 | 17.9 | 3635 | 0.54 | - | - |
| 15 | 18,0 | 3309 | 0,72/0,07* | - | - |

| | | | | | |
|---|---|---|---|---|---|
| **) after V100 test* | | | | | |

The results of the investigations carried out with the above examples demonstrate that a ionic liquid of the general formula 1 and its mixtures with tebuconazole can be applied for preparation of particleboards which meet the PN-EN 312: 2011 standard. The above biocide agents can be applied onto woodchips together with the bonding resin, which guarantees a uniform particleboard protection even without introduction of any additional operations and machines in the manufacturing process.

## Claims

1. A method of antifungal protection of particleboards comprising an introduction of a fungicide into an adhesive resin **characterized in that** the dispersion of ionic liquid of the general formula 1, 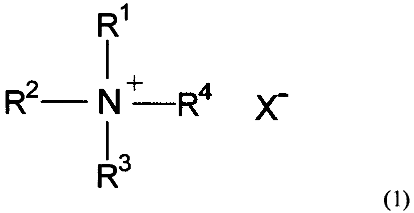 wherein:
- X is nitrate(V) anion
- R¹ is benzyl, an alkyl substituent of a carbon chain length of C₁₋₂₀, or an unsaturated hydrocarbon substituent of a carbon chain length of C₃₋₂₀ containing one or several unsaturated bonds,
- R² and R³ are equal and stand for an unsaturated hydrocarbon substituent of a carbon chain length C₃-₁₆ containing one or several unsaturated bonds,
R⁴ stands for an alkyl substituent with the carbon chain length of C₁₋₂₀, or an unsaturated hydrocarbon substituent with the carbon chain length of C₃₋₂₀ and **characterized by** one or more than one multiple chemical bonds,
containing a tebuconazole additive in an adhesive resin-used for particleboard bonding is prepared and, subsequently, the so prepared composition of the resin and the ionic liquid dispersion (with tebuconazole) is spread onto the chips with known methods and, thus, the process of particleboard production is continued with known methods.

2. The method of claim 1 **characterized in that** the ionic liquid containing nitrate(V) and tebuconazole is applied in an amount of 1 up to 10 kg/m³ of the particleboard .

3. The method of claim 1 **characterized in that** tebuconazole is applied in an amount of not less than 0.40 kg/m³ of the particleboard.

4. The method of claims 1 or 2 **characterized in that** the ratio of the ionic liquid to tebuconazole amounts to a value between 100:5 and 7:3.

5. The method of claim 3 **characterized in that** the ratio of the ionic liquid to tebuconazole amounts to a value between 9:1 and 4:1.

6. A method of antifungal protection of particleboards comprising an introduction of a fungicide into it during the process of particleboard production **characterized in that** a dispersion of the ionic liquid of formula 1 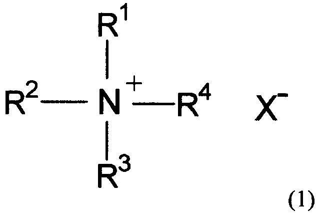 wherein
- R¹ stands for benzyl, an alkyl substituent with the carbon chain length of C₁₋₂₀, or an unsaturated hydrocarbon substituent with the carbon chain length of C₃₋₂₀ containing one or several unsaturated bonds,
- R², R³ are equal and stand for an unsaturated hydrocarbon substituent with the carbon chain length of C₃₋₁₆ containing one or several unsaturated bonds,
- R⁴ stands for an alkyl substituent with the carbon chain length of C₁₋₂₀, or an unsaturated hydrocarbon substituent with the carbon chain length of C₃₋₂₀ containing one or several unsaturated bonds,
- X stands for nitrate(V) anion,
with the tebuconazole additive is prepared and such a dispersion is spread onto the chips simultaneously with the application of the adhesive resin, after which the process of particleboard production is continued with known methods.

7. The method of claim **6 characterized in that** the ionic liquid is used in an amount between 1 and 10 kg/m³ of the particleboard.

8. The method of claim 6 **characterized in that** the ionic liquid is used in an amount between 2 and 4 kg/m³ of the particleboard.

## Patentansprüche

1. Das Verfahren zur Absicherung von Spanplatten vor Pilzenwirkung, das in der Einführung des Fungizides ins Klebeharz besteht, und sich dadurch auszeichnet, dass es eine Dispersion von ionischen Flüssigkeiten mit der 1-Formel erzeugt wird. 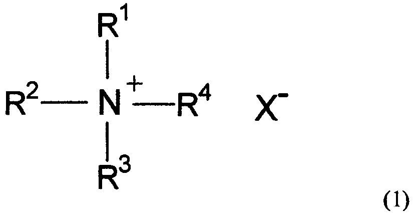 wobei
- X Nitrat-Anion (V) ist
- R¹ Benzyl ist, Alkyl-Substituent von der Länge der Karbonkette C₁₋₂₀ oder ungesättigter Kohlenwasserstoff-Substituent von der Länge der Karbonkette C₃₋₂₀ der eine oder mehrere ungesättigte Bindungen enthält,
- R², R³ gleich sind und ungesättigter Kohlenwasserstoff-Substituent von der Länge der Karbonkette C₃₋₁₆ , der eine oder mehrere ungesättigte Bindungen enthält, bedeuten
- R⁴ Alkyl-Substituent von der Länge der Karbonkette C₁₋₂₀ oder ungesättigter Kohlenwasserstoff-Substituent von der Länge der Karbonkette C₃₋₂₀, der eine oder mehrere ungesättigte Bindungen enthält, ist
und der den Tebuconazol-Zusatz im Adhäsionsharz für das Kleben von Spanholzplatten enthält, und dann so präparierte Komposition von Harz und Dispersion der ionischen Flüssigkeiten (mit Tebuconazol) wird auf den Spanplatten mit der schon bekannten Methode verstrichen, und so Spanholzplattenproduktionsverfahren wird unter Verwendung der bekannten Methoden fortgesetzt.

2. Verfahren nach Anspruch 1, **dadurch gekennzeichnet, dass** die ionische Flüssigkeit, die Nitrat (V) und Tebuconazol in der Menge von 1 bis 10 kg /m³ der Spanholzplatte enthält.

3. Verfahren nach Anspruch 1, **dadurch gekennzeichnet, dass** Tebuconazol wird in der Menge nicht weniger als 0,40 kg / m³ der Spanholzplatte aufgetragen.

4. Verfahren nach Anspruch 1 oder 2, **dadurch gekennzeichnet, dass** Verhältnis der ionischen Flüssigkeit zum Tebuconazol von 100: 5 bis 7: 3 beträgt.

5. Verfahren nach Anspruch 3, **dadurch gekennzeichnet, dass** Verhältnis der ionischen Flüssigkeit zum Tebuconazol von 9: 1 bis 4: 1 beträgt.

6. Verfahren zur Absicherung der Spanholzplatten vor Fungizidenwirkung, die in Einführung des Fungiziden ins Klebeharz besteht und zeichnet sich dadurch aus, dass es eine Dispersion der ionischen Flüssigkeiten mit der 1-Formel erzeugt wird, 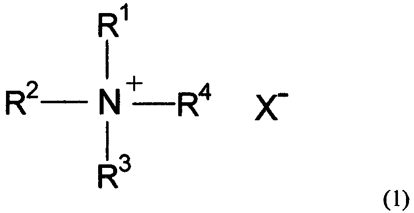 wobei
- R¹ Benzyl, Akyl-Substituent von der Länge der Karbonkette C₁₋₂₀ oder ungesättigter Kohlenwasser-Substituent von der Länge der Karbonkette C₃₋₂₀, der eine oder mehrere ungesättigte Bindungen enthält, ist
- R², R³ gleich sind und ungesättigten Kohlenwasserstoff-Substituent von der Länge der Karbonkette C_{3-16.} der eine oder mehrere ungesättigte Bindungen enthält, bedeuten
- R⁴ Aklyl-Substituent von der Länge der Karbonkette C₁₋₂₀ oder den ungesättigten Kohlenwasserstoff-Substituent von der Länge der Karbonkette C₃₋₂₀, der eine oder mehrere ungesättigte Bindungen enthält, ist
- X Nitrat-Anion (V) ist
mit dem Zusatz von Tebuconazol und so eine Dispersion wird auf den Spanholzplatten gleichzeitig mit der Auftragung des Klebeharzes verstrichen, wonach Spanholzplattenproduktionsverfahren mit den bekannten Methoden fortgesetzt wird.

7. Verfahren nach Anspruch 6, **dadurch gekennzeichnet, dass** die ionische Flüssigkeit in der Menge von 1 bis 10 kg/m³ der Spanholzplatte angewendet wird.

8. Verfahren nach Anspruch 6, **dadurch gekennzeichnet, dass** die ionische Flüssigkeit in der Menge von 2 bis 4 kg/m³ der Spanholzplatte angewendet wird.

## Revendications

1. Le procédé de protection de panneaux d'aggloméré contre les champignons en introduisant dans la résine de colle un fongicide **caractérisé en ce qu'**une dispersion de liquides ioniques selon la formule 1 est préparée, 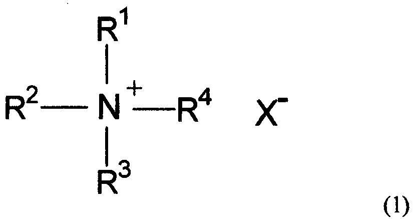 où
- X est l'anion nitrate (V)
- R¹ est le benzyle, substituant alkyle ayant une longueur de chaîne carbonée de C₁.₂₀ ou substituant hydrocarboné insaturé ayant une longueur de chaîne carbonée de C₃₋₂₀ contenant une ou plusieurs liaisons insaturées
- R², R³ sont égaux et représentent le substituant hydrocarboné insaturé ayant une longueur de chaîne carbonée de C₃₋₁₆ contenant une ou plusieurs liaisons insaturées
- R⁴ est le substituant alkyle ayant une longueur de chaîne carbonée de C₁₋₂₀ ou substituant hydrocarboné insaturé ayant une longueur de chaîne carbonée de C₃₋₂₀ contenant une ou plusieurs liaisons insaturées
contenant l'addition de tébuconazole dans la résine adhésive utilisée pour le collage de panneaux d'aggloméré, ensuite la composition de résine et de dispersion liquide ionique ainsi préparée (avec du tébuconazole) est étalée sur l'aggloméré avec des procédés connus, de sorte que le procédé de production de panneaux d'aggloméré est poursuivi par des procédés connus.

2. Le procédé selon la revendication 1, **caractérisé en ce que** le liquide ionique contenant du nitrate (V) et du tébuconazole est appliqué en une quantité de 1 à 10 kg/m³ de panneau d'aggloméré.

3. Le procédé selon la revendication 1, **caractérisé en ce que** le tébuconazole est appliqué en une quantité d'au moin de 0,40 kg/m³ de panneau d'aggloméré.

4. Le procédé selon la revendication 1 ou 2, **caractérisé en ce que** le rapport du liquide ionique au tébuconazole est de 100: 5 à 7 3

5. Le procédé selon la revendication 3, **caractérisé en ce que** le rapport du liquide ionique au tébuconazole est de 9: 1 à 4 1

6. Le procédé de protection de panneaux d'aggloméré contre les champignons en introduisant dans la résine de colle un fongicide **caractérisé en ce qu'**une dispersion de liquides ioniques selon la formule 1 est préparée, 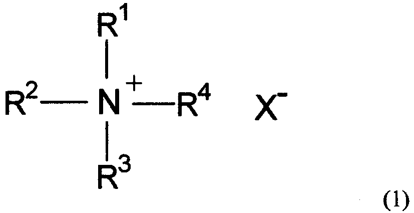 où
- R¹ est le benzyle, substituant alkyle ayant une longueur de chaîne carbonée de C₁.₂₀ ou substituant hydrocarboné insaturé ayant une longueur de chaîne carbonée de C₃₋₂₀ contenant une ou plusieurs liaisons insaturées
- R², R³ sont égaux et représentent un substituant hydrocarboné insaturé ayant une longueur de chaîne carbonée de C₃₋₁₆ contenant une ou plusieurs liaisons insaturées
- R⁴ est le substituant alkyle ayant une longueur de chaîne carbonée de C₁₋₂₀ ou substituant hydrocarboné insaturé ayant une longueur de chaîne carbonée de C₃₋₂₀ contenant une ou plusieurs liaisons insaturées
- X est l'anion nitrate (V)
avec l'addition de tébuconazole et une telle dispersion est appliquée sur l'aggloméré simultanément avec l'application de résine adhésive, après quoi le procédé de production de panneaux d'aggloméré est poursuivi avec des procédés connus.

7. Le procédé selon la revendication 6, **caractérisé en ce que** le liquide ionique est appliqué en une quantité de 1 à 10 kg/m³ de panneau d'aggloméré.

8. 8 Le procédé selon la revendication 6, **caractérisé en ce que** le liquide ionique est appliqué en une quantité de w à 4 kg/m³ de panneau d'aggloméré.
